# EUROPÄISCHE PATENTSCHRIFT

(11) **EP 0 431 288 B1**
(45) Veröffentlichungstag und Bekanntmachung des Hinweises auf die Patenterteilung: **09.02.1994**
(21) Anmeldenummer: 90119968.7
(22) Anmeldetag: 18.10.1990
(51) Int. Cl.: F16K 27/06

(54) **Kugelhahn**
Ball cook
Robinet à tournant sphérique

(30) Priorität: 04.12.1989 CH 4331/89
(43) Veröffentlichungstag der Anmeldung: 12.06.1991
(73) Patentinhaber: GEORG FISCHER AKTIENGESELLSCHAFT, CH-8201 Schaffhausen (CH)
(72) Erfinder: Hunziker, Bruno, CH-8234 Stetten (CH); Kunz, Peter, CH-8200 Schaffhausen (CH)

(56) Entgegenhaltungen:
- CH-A- 588 651
- DE-A- 2 909 106
- DE-A- 3 821 060
- DE-U- 7 931 893
- FR-A- 2 634 000
- US-A- 3 647 179
- US-A- 4 272 057

## Beschreibung

Die Erfindung betrifft einen Kugelhahn, wie er im Oberbegriff von den Ansprüchen 1 und 2 beschrieben ist.

Durch die DE-A-29 09 106 ist ein Kugelhahn der eingangs genannten Art bekanntgeworden, bei welchem bei dessen Herstellung nach dem Einsetzen des Kugelkükens zuerst die beiden Gehäusehälften miteinander durch Schweissen verbunden werden. Anschliessend wird ein Teil zur Lagerung der Betätigungsstange für das Küken an den beiden Gehäusehältens angeschweisst.

Durch die CH-A-588 651 ist ein Kugelhahn bekanntgeworden, bei welchem für die Montage des Kugelkükens mit Zapfen in dem einen Gehäuseteil es erforderlich ist, dass der zur Befestigung des Handgriffes notwendige Zapfenteil abgebogen oder abgewinkelt ist. Trotzdem ist das Einführen des Kugelkükens mit Zapfen kompliziert und nur mit grösstem Aufwand automatisierbar. Durch die komplizierte Zapfenform ist auch die Montage des Handgriffes entsprechend aufwendig und schwer automatisierbar.

Im weiteren sind Kugelhähne mit zweiteiligen Gehäusen bekanntgeworden deren Trennebene durch die Zapfenmitte verläuft und die beiden Gehäuseteile z.B. mittels Schrauben lösbar miteinander verbunden sind. Nachteilig hierbei ist, dass der einteilige, komplizierte Dichtungsring über den Kugelkükenzapfen gestülpt werden muss, so dass die Montage auch durch die Schraubverbindung sehr aufwendig ist. Für eine rationelle, automatische Montage ist dieser Kugelhahn nicht geeignet.

Aufgabe der vorliegenden Erfindung ist die Schaffung eines Kugelhahnes der eingangs genannten Art, welcher mit wenig unterschiedlichen Teilen einfach und automatisch montierbar ist und bei welchem eine dauerhafte, dichte Verbindung der Gehäuseteile gewährleistet ist.

Erfindungsgemäss wird diese Aufgabe durch die kennzeichnenden Merkmale der Ansprüche 1 und 2 gelöst. Ein Verfahren zur Herstellung eines derartigen Kugelhahns ist in den Ansprüchen 7 und 8 gekennzeichnet.

Besonders vorteilhafte Ausgestaltungen der Erfindung sind in den abhängigen Ansprüchen gekennzeichnet.

Durch die Anordnung eines Ringes in einer Ringnute der beiden Gehäusehälften, wird verhindert, dass beim Verschweissen der beiden Gehäusehälften sich ein Schweisswulst im Bereich des Lagersitzes bilden kann wobei gleichzeitig eine genaue Zentrierung des Lagersitzes erreicht wird.

Das gleiche wird durch das Einschieben einer Buchse in eine Bohrung der Gehäusehälften erreicht.

Die Erfindung ist in den beiliegenden Zeichnungen anhand von Ausführungsbeispielen dargestellt und nachfolgend beschrieben. Es zeigen:
- Fig. 1: einen Längsschnitt durch einen Kugelhahn,
- Fig. 2: einen Schnitt entlang der Linie II - II von Fig. 1 und
- Fig. 3: eine Ausführungsvariante von Fig. 1 in einem Teilschnitt.

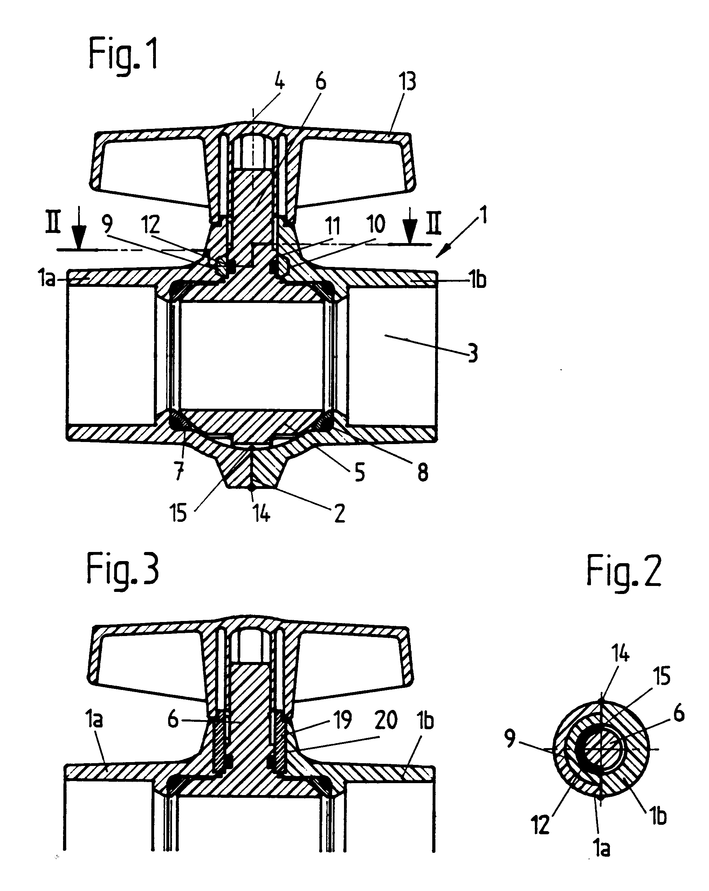

Der Kugelhahn gemäss Fig. 1 und 2 weist ein aus zwei,vorzugsweise identischen Gehäuseteilen 1a, 1b bestehendes Gehäuse 1 aus Kunststoff auf. Die Trennebene 2 der beiden Gehäuseteile 1a, 1b verläuft parallel zu einer Durchflussöffnung 3 durch eine Drehachse 4 für ein Kugelküken 5. Am Kugelküken 5 ist ein Zapfen 6 angeordnet, wobei Kugelküken 5 und Zapfen 6 einstückig, z.B. als Spritzgussteil aus Kunststoff, hergestellt sind. Zwischen dem Kugelküken 5 und den Gehäuseteilen 1a, 1b ist jeweils ein Dichtring 7 und ein Rundgummiring 8 angeordnet, wobei der Dichtring 7 durch eine Vorspannung des Rundgummiringes 8 am Kugelküken 5 anliegt.

Ein als im Querschnitt trapezförmiger Ring 9 ausgebildetes Teil ist in einer Ringnute 10 der beiden Gehäuseteile 1a, 1b angeordnet, wobei die Innenumfangsfläche 11 des Ringes 9 den Lagersitz für den Zapfen 6 und gleichzeitig die Dichtfläche für eine am Zapfen 6 angeordnete Dichtung 12 bildet. Die Dichtung 12 ist vorzugsweise als Rundgummiring ausgebildet. Aus dem aus dem Gehäuse 1 herausragenden Ende des Zapfens 6 ist ein Handgriff 13 aus Kunststoff aufgesteckt.

Mindestens die beiden Gehäuseteile 1a, 1b und der Ring 9 sind aus einem schweissbaren, thermoplastischen Material wie z.B. Polyvinylchlorid, Polyethylen, Polypropylen oder einem ähnlichen Kunststoff hergestellt, wobei die Gehäuseteile 1a, 1b an der Trennebene 2 miteinander und der Ring 9 an der Aussenkontur mit den beiden Gehäusehälften 1a, 1b verschweisst sind. Am Aussen- und Innenumfang der Trennebene 2 entstehen dabei Schweisswülste 14 und 15 (siehe Fig. 1 und 2), wobei durch den Einsatz des Ringes 9 die Bildung eines Schweisswulstes im Bereich des Lagersitzes 11 für den Zapfen 6 und dessen nachträgliche Entfernung durch eine spanabnehmende Bearbeitung vermieden wird.

Die Verschweissung erfolgt vorzugsweise durch Erhitzung der zu verschweissenden Flächen mittels einer Wärmestrahlung, wie z.B. mittels einer Infrarot-Strahlungs-Heizquelle. Selbstverständlich kann auch eine Klebung bzw. Kaltschweissung für die Verbindung der Teile angewendet werden, falls diese für das verwendete Kunststoffmaterial vorteilhafter ist.

Die Montage erfolgt wie nachfolgend beschrieben:

In jede der beiden Gehäusehälften 1a, 1b wird der Rundgummiring 8 und der Dichtring 7 eingelegt. Auf den Zapfen 6 des Kugelkükens 5 wird nach Einsetzen der Dichtung 12 der Ring 9 aufgeschoben. Dann werden die Trennebenen 2 der Gehäuseteile 1a, 1b und der Aussenumfang des Ringes 9 mittels Wärmestrahlen erhitzt. Beim anschliessenden Zusammenfügen der Gehäuseteile 1a, 1b unter Druck erfolgt eine Zentrierung des Ringes 9 mit dem Zapfen 6 in der Ringnute 10 und des Kugelkükens 5 zwischen den Dichtringen 7, wobei die beiden Gehäuseteile 1a, 1b miteinander und gleichzeitig der Ring 9 mit den Gehäuseteilen 1a, 1b verschweisst werden. Anschliessend wird der Handgriff 13 aufgesteckt.

Der gesamte Montageablauf kann leicht automatisiert werden, wobei der Kugelhahn ohne Nacharbeit betriebsfertig und mediumsdicht montierbar ist.

Bei der in der Fig. 3 gezeigten Ausführungsvariante ist das die Zapfenlagerung bildende Teil als Büchse 19 ausgebildet, welche in eine als Bohrung ausgebildete Ausnehmung 20 von aussen nach dem Zusammenschweissen der beiden Gehäuseteile 1a, 1b eingeschoben und mit diesen Teilen verschweisst wird.

Die Verschweissung der Büchse 19 erfolgt dabei während oder nach dem Einschieben in das Gehäuse 1 mittels Ultraschall.

Auch bei dieser Ausführungsvariante ist eine ohne Nacharbeit gratfreie Lager- und Dichtfläche für den Zapfen gewährleistet.

## Patentansprüche

1. Kugelhahn, mit einem aus einem thermoplastischen Material zweiteilig ausgebildeten Gehäuse (1), dessen beide Teile (1a, 1b) mittels einer Stoffschlussverbindung unlösbar miteinander dicht verbunden sind und dessen Kugelküken (5) mit einem Zapfen (6) einteilig ausgebildet ist, wobei der um eine Drehachse (4) verdrehbare Zapfen (6) in einer quer zur Durchflussrichtung verlaufenden Bohrung des Gehäuses (1) gelagert und mittels einer Dichtung (12) nach aussen abgedichtet ist, die Trennebene (2) der beiden Gehäuseteile (1a, 1b) quer zur Durchflussrichtung und durch die Drehachse (4) des Zapfens (6) verläuft und wobei mindestens im Bereich der Dichtung (12) ein Teil (9) angeordnet ist, welches durch eine Stoffschlussverbindung dicht mit den Gehäuseteilen (1a, 1b) verbunden ist, dadurch gekennzeichnet, dass das Teil (9) als Ring (9) ausgebildet in einer Ringnute (10) der beiden Gehäuseteile (1a, 1b) angeordnet ist und dass das Kugelküken (5) und der Zapfen (6) aus Kunststoff bestehen.

2. Kugelhahn, mit einem aus einem thermoplastischen Material zweiteilig ausgebildeten Gehäuse (1), dessen beide Teile (1a, 1b) mittels einer Stoffschlussverbindung unlösbar miteinander dicht verbunden sind und dessen Kugelküken (5) mit einem Zapfen (6) einteilig ausgebildet ist, wobei der um eine Drehachse (4) verdrehbare Zapfen (6) in einer quer zur Durchflussrichtung verlaufenden Bohrung des Gehäuses (1) gelagert und mittels einer Dichtung (12) nach aussen abgedichtet ist, die Trennebene (2) der beiden Gehäuseteile (1a, 1b) quer zur Durchflussrichtung und durch die Drehachse (4) des Zapfens (6) verläuft und wobei mindestens im Bereich der Dichtung (12) ein Teil (19) angeordnet ist, welches durch eine Stoffschlussverbindung dicht mit den Gehäuseteilen (1a, 1b) verbunden ist, dadurch gekennzeichnet, dass das Teil (19) als eine in eine als Bohrung ausgebildete Ausnehmung (20) der beiden Gehäuseteile (1a, 1b) von aussen einschiebbare und darin angeordnete Büchse (19) ausgebildet ist und dass das Kugelküken (5) und der Zapfen (6) aus Kunststoff bestehen.

3. Kugelhahn nach Anspruch 1, dadurch gekennzeichnet, dass die beiden Gehäuseteile (1a, 1b) und der Ring (9) mittels einer Schweissung vorzugsweise mittels einer Wärme-Strahlungs-Schweissung miteinander fest verbunden sind.

4. Kugelhahn nach einem der Ansprüche 1 bis 3, dadurch gekennzeichnet, dass die beiden Gehäuseteile (1a, 1b) identisch als Gehäusehälften ausgebildet sind.

5. Kugelhahn nach einem der Ansprüche 1 bis 4, dadurch gekennzeichnet, dass die Dichtung (12) als Rundgummiring im Zapfen (6) angeordnet ist und die Innenumfangsfläche (11) einer Bohrung des Ringes (9) bzw. der Büchse (19) die Dichtfläche bildet.

6. Kugelhahn nach einem der Ansprüche 1 oder 3 bis 4, dadurch gekennzeichnet, dass der Ring (9) im Querschnitt trapezförmig ausgebildet ist.

7. Verfahren zur Herstellung eines Kugelhahns mit den Merkmalen gemäss einem der Ansprüche 1, 3, 4 oder 6, gekennzeichnet durch folgende Verfahrensschritte:
- Aufstecken des Ringes (9) auf den mit der Dichtung (12) versehenen Zapfen (6).
- Einsetzen je eines Dichtringes (7) für das Kugelküken (5) in jedes Gehäuseteil (1a, 1b),
- Erhitzen der Trennebene (2) der Gehäuseteile (1a, 1b) und des Aussenumfanges des auf dem Zapfen (6) aufgesetzten Ringes (9) mittels Wärmestrahlen,
- Zusammenfügen der beiden Gehäuseteile (1a, 1b) mit Druck, bei gleichzeitiger Zentrierung des Ringes (9) mit dem Zapfen (6) in der Ringnute (10) und des Kugelkükens (5) zwischen den Dichtringen (7), wobei die beiden Gehäuseteile (1a, 1b) miteinander und der Ring (9) mit den Gehäuseteilen (1a, 1b) verschweisst werden.

8. Verfahren zur Herstellung eines Kugelhahnes mit den Merkmalen gemäss einem der Ansprüche 2 oder 4 gekennzeichnet durch folgende Verfahrensschritte:
- Einsetzen je eines Dichtringes (7) für das Kugelküken (5) in jedes Gehäuseteil (1a, 1b),
- Erhitzen der Trennebene (2) der Gehäuseteile (1a, 1b)
- Zusammenfügen der beiden Gehäuseteile (1a, 1b) mit Druck bei gleichzeitiger Zentrierung des Kugelkükens (5) zwischen den Dichtungen (7), wobei die beiden Gehäuseteile (1a, 1b) miteinander verschweisst werden,
- Aufschieben der Büchse (19) auf den Zapfen (6) bei gleichzeitigem Einschieben in die Bohrung (20) des Gehäuses (1) mit gleichzeitigem oder anschliessendem Verschweissen der Büchse (19) mit dem Gehäuse (1) mittels Ultraschall.

## Claims

1. Stopcock having a housing (1) constructed in two parts from a thermoplastics material, the two parts (1a, 1b) of which housing are tightly and permanently joined together by means of a substance sealing joint and the plug (5) of which is constructed in one piece with a journal (6), wherein the journal (6), rotatable about an axis of rotation (4), is mounted in a bore of the housing (1) extending transversely to the throughflow direction and is sealed outwardly by means of a seal (12), the parting plane (2) of the two housing parts (1a, 1b) extends transversely to the throughflow direction and through the axis of rotation (4) of the journal (6) and wherein at least in the region of the seal (12) a part (9) is arranged which is connected in a sealed manner by means of a substance sealing joint to the housing parts (1a, 1b),
characterised in that the part (9) constructed as a ring (9) is arranged in an annular groove (10) of the two housing parts (1a, 1b) and in that the plug (5) and the journal (6) are made of plastics.

2. Stopcock having a housing (1) constructed in two parts from a thermoplastics material, the two parts (1a, 1b) of which housing are tightly and permanently joined together by means of a substance sealing joint and the plug (5) of which is constructed in one piece with a journal (6), wherein the journal (6), rotatable about an axis of rotation (4), is mounted in a bore of the housing (1) extending transversely to the throughflow direction and is sealed outwardly by means of a seal (12), the parting plane (2) of the two housing parts (1a, 1b) extends transversely to the throughflow direction and through the axis of rotation (4) of the journal (6) and wherein at least in the region of the seal (12) a part (19) is arranged which is connected in a sealed manner by means of a substance sealing joint to the housing parts (1a, 1b),
characterised in that the part (19) is constructed as a bushing (19) which can be inserted from outside into a recess of the two housing parts (1a, 1b) constructed as a bore (20) and arranged therein, and in that the stop-cock plug (5) and the journal (6) are made of plastics.

3. Stopcock according to claim 1, characterised in that the two housing parts (1a, 1b) and the ring (9) are fixedly joined together by means of a welded joint, preferably by means of a heat radiation welded joint.

4. Stopcock according to one of claims 1 to 3, characterised in that the two housing parts (1a, 1b) are identically constructed as housing halves.

5. Stopcock according to one of claims 1 to 4, characterised in that the seal (12) is arranged as a round rubber ring in the journal (6), and the inner circumferential surface (11) of a bore of the ring (9) or of the bushing (19) forms the sealing surface.

6. Stopcock according to one of claims 1 or 3 to 4, characterised in that the ring (9) is constructed to be trapezoidal in cross-section.

7. Process for the production of a stopcock having the features according to one of claims 1, 3, 4 or 6, characterised by the following process steps:
- placing the ring (9) onto the journal (6) provided with the seal (12),
- inserting a sealing ring (7) for the plug (5) into each housing part (1a, 1b),
- heating the parting plane (2) of the housing parts (1a, 1b) and of the outer circumference of the ring (9) placed on the journal (6) by means of heat radiation,
- joining together the two housing parts (1a, 1b) by pressure, simultaneously centering the ring (9) with the journal (6) in the annular groove (10), and the plug (5) between the sealing rings (7), whereby the two housing parts (1a, 1b) are welded together and the ring (9) is welded to the housing parts (1a, 1b).

8. Process for the production of a stopcock having the features of one of claims 2 or 4, characterised by the following process steps:
- inserting a sealing ring (7) for the plug (5) into each housing part (1a, 1b),
- heating the parting plane (2) of the housing parts (1a, 1b),
- joining together the two housing parts (1a, 1b) by pressure, simultaneously centering the plug (5) between the seals (7), whereby the two housing parts (1a, 1b) are welded together,
- pushing the bushing (19) onto the journal (6), with simultaneous insertion into the bore (20) of the housing (1) with simultaneous or subsequent welding of the bushing (19) to the housing (1) by means of ultrasound.

## Revendications

1. Robinet à boisseau sphérique avec un corps (1) en deux parties, réalisé en un matériau thermoplastique, dont les deux parties (1a, 1b) sont reliées ensemble de façon étanche et indétachable au moyen d'une liaison par la matière, et dont le boisseau sphérique (5) est réalisé d'un seul tenant avec un tourillon (6), le tourillon (6), susceptible de tourner autour d'un axe de rotation (4), tourillonnant dans un alésage, transversal à la direction de passage de l'écoulement du corps (1) et étant isolé de façon étanche vis-à-vis de l'extérieur au moyen d'un joint d'étanchéité (12), le plan de séparation (2) des deux parties de corps (1a, 1b) s'étendant transversalement par rapport à la direction du passage de l'écoulement et passant par l'axe de rotation (4) du tourillon (6) et où, au moins dans la zone du joint d'étanchéité (12), est disposée une partie (9) reliée de façon étanche aux parties de corps (1a, 1b), au moyen d'une liaison de matière, caractérisé en ce que la partie (9) est réalisée sous forme de bague (9), disposée dans une gorge annulaire (10) des deux parties de corps (1a, 1b) et en ce que le boisseau sphérique (5) et le tourillon (6) sont réalisés en matière synthétique.

2. Robinet à boisseau sphérique avec un corps (1) en deux parties, réalisé en un matériau thermoplastique, dont les deux parties (1a, 1b) sont reliées ensemble de façon étanche et détachable au moyen d'une liaison par la matière, et dont le boisseau sphérique (5) est réalisé d'un seul tenant avec un tourillon (6), le tourillon (6), susceptible de tourner autour d'un axe de rotation (4), tourillonnant dans un alésage, transversal à la direction de passage de l'écoulement du corps (1) et étant isolé de façon étanche vis-à-vis de l'extérieur au moyen d'un joint d'étanchéité (12), le plan de séparation (2) des deux parties de corps (1a, 1b) s'étendant transversalement par rapport à la direction du passage de l'écoulement et passant par l'axe de rotation (4) du tourillon (6) et où, au moins dans la zone du joint d'étanchéité (12), est disposée une partie (19) reliée de façon étanche aux parties de corps (1a, 1b), au moyen d'une liaison de matière, caractérisé en ce que la partie (19) est réalisée sous forme d'une douille (19), insérable depuis l'extérieur dans un évidement, réalisé sous forme de perçage (20), des deux parties de corps (1a, 1b) et d'être disposé à l'intérieur de cet évidement et en ce que le boisseau sphérique (5) et le tourillon (6) sont réalisés en matière synthétique.

3. Robinet à boisseau sphérique selon la revendication 1, caractérisé en ce que les deux parties de corps (1a, 1b) et la bague (9) sont reliées rigidement au moyen d'une soudure, de préférence au moyen d'une soudure par rayonnement thermique.

4. Robinet à boisseau sphérique selon l'une des revendications 1 à 3, caractérisé en ce que les deux parties de corps (1a, 1b) sont réalisées à l'identique, sous forme de demi-corps.

5. Robinet à boisseau sphérique selon l'une des revendications 1 à 4, caractérisé en ce que le joint d'étanchéité (12) est disposé, à titre de bague torique en caoutchouc, dans le tourillon (6) et la face périphérique intérieure (11) d'un perçage de la bague (9) ou de la douille (19) formant la surface d'étanchéité.

6. Robinet à boisseau sphérique selon l'une des revendications 1 ou 3 à 4, caractérisé en ce que la bague (9) a une section transversale trapézoïdale.

7. Procédé de fabrication d'un robinet à boisseau présentant les caractéristiques de l'une des revendications 1, 3, 4 ou 6, caractérisé par les étapes de procédé suivantes:
- enfichage de la bague (9) sur le tourillon (6) pourvu du joint d'étanchéité (12).
- insertion d'une bague d'étanchéité (7) pour le robinet à boisseau sphérique (5), dans chacune des parties de corps (1a, 1b),
- chauffage du plan de séparation (2) des parties de corps (1a, 1b) et de la périphérie extérieure de la bague (9) appliquée sur le tourillon (6), au moyen des rayons thermiques,
- assemblage des deux parties de corps (1a, 1b) par application de pression, avec centrage simultané de la bague (9) par rapport au tourillon (6) dans la gorge annulaire (10) et du boisseau sphérique (5) entre les bagues d'étanchéité (7), les deux parties de corps (1a, 1b) étant soudées ensemble et l'anneau (9) étant soudé avec les parties de corps (1a, 1b).

8. Procédé de fabrication d'un robinet à boisseau présentant les caractéristiques de l'une des revendications 2 ou 4, caractérisé par les étapes de procédé suivantes:
- insertion d'une bague d'étanchéité (7) pour le boisseau sphérique (5), dans chacune des parties de corps (1a, 1b),
- chauffage du plan de séparation (2) des parties de corps (1a, 1b)
- assemblage des deux parties de corps (1a, 1b) par application de pression, avec centrage simultané du boisseau sphérique (5) entre les bagues d'étanchéité (7), les deux parties de corps (1a, 1b) étant soudées ensemble,
- enfichage de la douille (19) sur le tourillon (6) avec simultanément insertion dans le perçage (20) du corps (1) avec, simultanément ou ensuite, soudage de la douille (19) au corps (1), par ultrasons.
